(19)

Europäisches
Patentamt
European
Patent Office
Office européen
des brevets

(11) **EP 3 605 011 A1**

(12) **EUROPEAN PATENT APPLICATION**

published in accordance with Art. 153(4) EPC

(43) Date of publication:
**05.02.2020 Bulletin 2020/06**

(21) Application number: **18777528.3**

(22) Date of filing: **14.03.2018**

(51) Int Cl.:
*G01B 11/24* (2006.01)     *G01B 11/26* (2006.01)
*G06T 7/521* (2017.01)     *G06T 7/70* (2017.01)

(86) International application number:
**PCT/JP2018/010041**

(87) International publication number:
**WO 2018/180503 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2017 JP 2017067932**

(71) Applicant: **Equos Research Co., Ltd.
Tokyo 101-0021 (JP)**

(72) Inventor: **KUNO Kazuhiro
Tokyo 101-0021 (JP)**

(74) Representative: **TBK
Bavariaring 4-6
80336 München (DE)**

(54) **BODY DIRECTION ESTIMATION DEVICE AND BODY DIRECTION ESTIMATION PROGRAM**

(57)     A body direction estimation device and body direction estimation program are provided which suppress the effects of arm swing when a target is walking, enabling estimating the direction a target is facing.

[Problem]

In this body direction estimation device (1), measured distance values (MP) of the upper body of the target (H), acquired from a ranging sensor (3), are grouped into one or multiple groups. If the relative angle between the approximate ellipse of the group of the right arm or left arm and the approximate ellipse of the group of the torso is 60-120°, then these are grouped as the same group. Further, the ellipse type that corresponds to the group that includes the torso is acquired, the approximate ellipse of the upper body is calculated from the measured distance values (MP) corresponding to that ellipse type, and the minor axis (Sa) direction of he approximate ellipse of the upper body is set as the direction that the target (H) is facing. Therefore, because arms moving too far away from the torso are differentiated from the group that includes the torso, influence of the arm position of the target (H) is suppressed, enabling estimating the direction that the target (H) is facing.

Fig. 3

EP 3 605 011 A1

**Description**

Technical Field

The present invention relates to a body direction estimation device and a body direction estimation program capable of estimating a target direction while suppressing effects of swinging motions of arms of the target in walking.

Background Art

There has been a known device configured to process a picked-up image of a target to detect a position and a direction of the target's face so that the target's direction is detected. However, it is difficult to pick up an image of the target while satisfying requirements of resolution sufficient to execute face detection and the wide angle of view. If the target's face is not directed to the camera, the image of the face cannot be picked up. Accordingly, the face direction cannot be detected.

The human body direction estimation device disclosed in Patent Literature 1 includes two distance sensors 50. One of the distance sensors 50 is disposed at the position as high as the target's chest, and the other is disposed at the position as high as the target's leg. The direction of the target is estimated in accordance with measurement results of those two distance sensors 50. Specifically, the body (target) is estimated based on distance measurement point groups measured by the distance sensors 50 to calculate the body's center of gravity. By tracking the change in the center of gravity, the moving direction of the target is calculated. The target direction is estimated as the calculated direction. Likewise, the position detector disclosed in Patent Literature 2 performs measurement of the target using a plurality of distance sensors 11 to 14. Then the cluster constituting the outline of the body (target) is detected from the resultant distance measurement point groups so that the center of gravity is calculated. By tracking the change in the center of gravity, the moving direction of the target is calculated. The target direction is estimated as the calculated direction.

Citation List

Patent Literature

Patent Literature 1: Japanese Unexamined Patent Application Publication No. 2011-081634
Patent Literature 2: Japanese Unexamined Patent Application Publication No. 2010-169521

Summary of Invention

Technical Problem

Usually a human walks while swinging left and right arms alternately. Upon execution of the distance measurement to the target's body part except shoulders, that is, both arms and the torso, swinging motions of arms may influence calculation of the target's center of gravity. As a result, the estimated direction of the target fluctuates to be in the unstable state under the influence of the swinging motions of arms. This makes it difficult to accurately estimate the target direction. Execution of distance measurement of the shoulder of the target allows calculation of the target's center of gravity without being largely influenced by the swinging motions of arms. However, it is still difficult due to individual differences in physique and the like to execute the distance measurement to the target's shoulder part constantly at a pin point.

The present invention has been made for solving the above-described problems, and it is an object of the present invention to provide a body direction estimation device and a body direction estimation program capable of estimating a target direction while suppressing effects of swinging motions of arms of the target in walking.

Solution to Problem

For achievement of the object, a body direction estimation device according to the present invention includes an upper body distance measurement unit that performs distance measurement of an upper body of a target, a grouping unit that groups measured distance data derived from the distance measurement performed by the upper body distance measurement unit, an ellipse calculation unit that calculates an approximate ellipse for each of groups of the measured distance data generated by the grouping unit, an ellipse selection unit that selects an ellipse for estimation of a direction of the target based on a positional relationship among the plurality of approximate ellipses, if any, calculated by the ellipse calculation unit, and a body direction estimation unit that estimates a direction of the target based on the ellipse selected by the ellipse selection unit.

A body direction estimation program according to the present invention allows a computer to execute an upper body measured distance acquiring function for acquiring measured distance data derived from distance measurement of an upper body of a target, a grouping function for grouping the measured distance data acquired from the upper body measured distance acquiring function, an ellipse calculation function for calculating an approximate ellipse for each of groups of the measured distance data generated by the grouping function, an ellipse selection function for selecting an ellipse for estimating a direction of the target based on a positional relationship among the plurality of approximate ellipses, if any, calculated by the ellipse calculation function, and a body direction estimation function for estimating the direction of the target based on the ellipse selected by the ellipse selection function.

Advantageous Effects of Invention

According to the body direction estimation device and the body direction estimation program, the measured distance data of the target's upper body are grouped into one or more groups. The torso and the arm connected thereto are in the same group. Meanwhile, the arm apart from the torso is in the group different from that of the torso. An approximate ellipse is calculated for each of the grouped measured distance data so that an approximate ellipse of the torso is distinguished from that of the arm apart from the torso. The ellipse based on which the target direction is estimated may be selected from a plurality of calculated approximate ellipses , if any, based on a positional relationship thereamong. Based on the selected ellipse, the target direction is estimated. The present invention provides an advantageous effect of estimating the target direction while suppressing effects of swinging motions of arms of the target in walking.

Brief Description of Drawings

Fig. 1 is a schematic view of an appearance of a human body front-rear determination device.
Fig. 2 is a block diagram showing an electric structure of a body direction estimation device.
Fig. 3 is a flowchart of main processing.
Fig. 4 is a flowchart of processing for selecting a torso ellipse type.
Fig. 5(a) is a schematic view of an ellipse type indicating that both arms and torso are in the same group.
Fig. 5(b) is a schematic view of an ellipse type indicating that the right arm and the torso are in the same group, and the left arm is in another group.
Fig. 5(c) is a schematic view of an ellipse type indicating that the left arm and the torso are in the same group, and the right arm is in another group.
Fig. 5(d) is a schematic view of an ellipse type indicating that the right arm, the left arm, and the torso are in different groups, respectively.
Fig. 6(a) is a schematic view of a positional relationship between 2 groups, that is, the approximate ellipse of the right arm and the approximate ellipse of the left arm and the torso.
Fig. 6(b) is a schematic view of a positional relationship among 3 groups, that is, the approximate ellipses of the left arm, the torso, and the right arm.
Fig. 7(a) is a schematic view of a threshold value of a relative angle.
Fig. 7(b) is a schematic view of estimation of the target direction.

Description of Embodiments

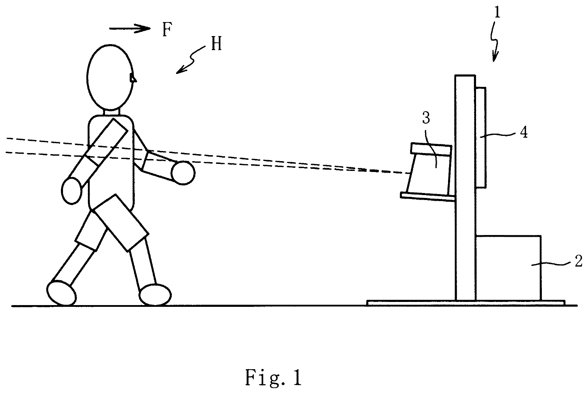

A preferred embodiment of the present invention will be described referring to the drawings. Referring to Fig. 1, an overview of a body direction estimation device 1 will be given as follows. Fig. 1 is a schematic view of an appearance of the body direction estimation device 1. The body direction estimation device 1 is configured to group measured distance values MP of the upper body detected by a ranging sensor 3 into groups, estimate the approximate ellipse of the upper body of a target H from positional relationships among the grouped approximate ellipses, and estimate the direction of the target H from the estimated approximate ellipse of the upper body. The body direction estimation device 1 includes a control unit 2 for controlling the respective components of the body direction estimation device 1, the ranging sensor 3, and a display unit 4.

The ranging sensor 3 irradiates laser beam omnidirectionally (360°) to measure the resultant scattered light so that the distance to the upper body of the target H is detected (distance measurement). The ranging sensor 3 transmits the distance to the upper body of the target H detected at each angle of 1° in association with the angle to the control unit 2. The ranging sensor 3 is disposed at the level lower than the eye level of the target H in the vertical direction. The ranging sensor 3 executes the distance measurement to the upper body of the target H upward obliquely. Additionally, an elevation angle formed between the ranging sensor 3 and the target H is set to the angle that allows detection of the distance to the upper body of the target H, and prevents incidence of the laser beam from the ranging sensor 3 to the target's eyes. Therefore, the ranging sensor 3 is capable of accurately detecting the distance to the target's upper body while securing safety of eyes of the target H.

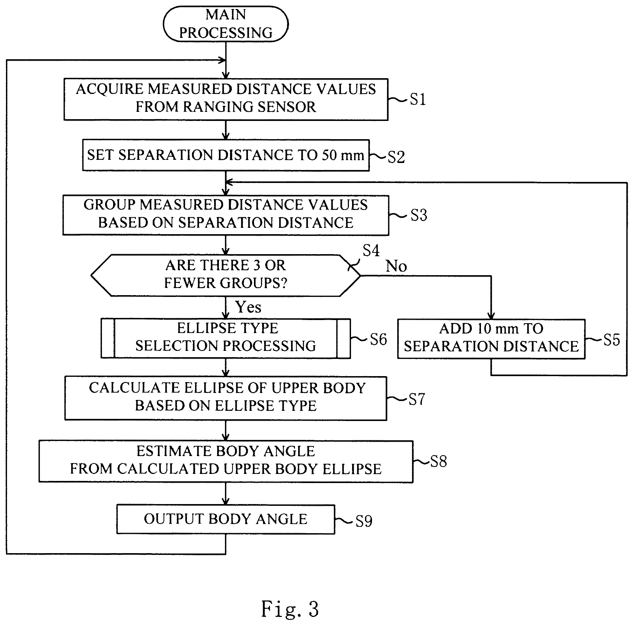

The display unit 4 is a device for displaying the direction of the target H or the like, and inputting a user's instruction to the body direction estimation device 1. The display unit 4 is constituted by an LCD 10 for displaying a body angle $\theta$ and the like of the target H, and a touch panel 11 through which the user's instruction is input to the control unit 2 (see Fig. 3). The display unit 4 is provided at the upper part of the body direction estimation device 1.

The control unit 2 is configured to group the measured distance values (measured distance data) MP of the upper body of the target H acquired from the ranging sensor 3 into groups in accordance with a separation distance as the distance between the adjacent measured distance values, and to select the ellipse type of the approximate ellipse of the upper body in accordance with the positional relationship between the approximate ellipses calculated from the grouped measured distance values MP. The approximate ellipse of the upper body is estimated from the selected ellipse type. A body angle $\theta$ as the angle of the approximate ellipse of the upper body is determined as the direction of the target H.

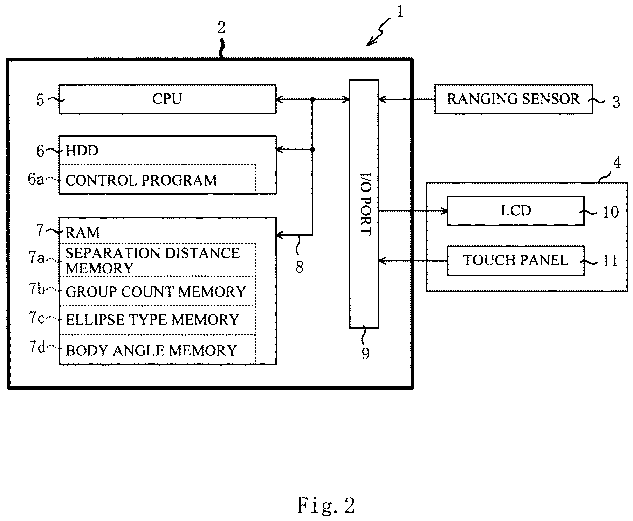

An electric structure of the body direction estimation device 1 will be described referring to Fig. 2. Fig. 2 is a block diagram showing the electric structure of the body direction estimation device 1. The control unit 2 includes a CPU 5, a hard disk drive (HDD) 6, and a RAM 7, all of which are connected to an I/O port 9 via a bus line 8. The I/O port 9 is connected to the ranging sensor 3, and the display unit 5, respectively.

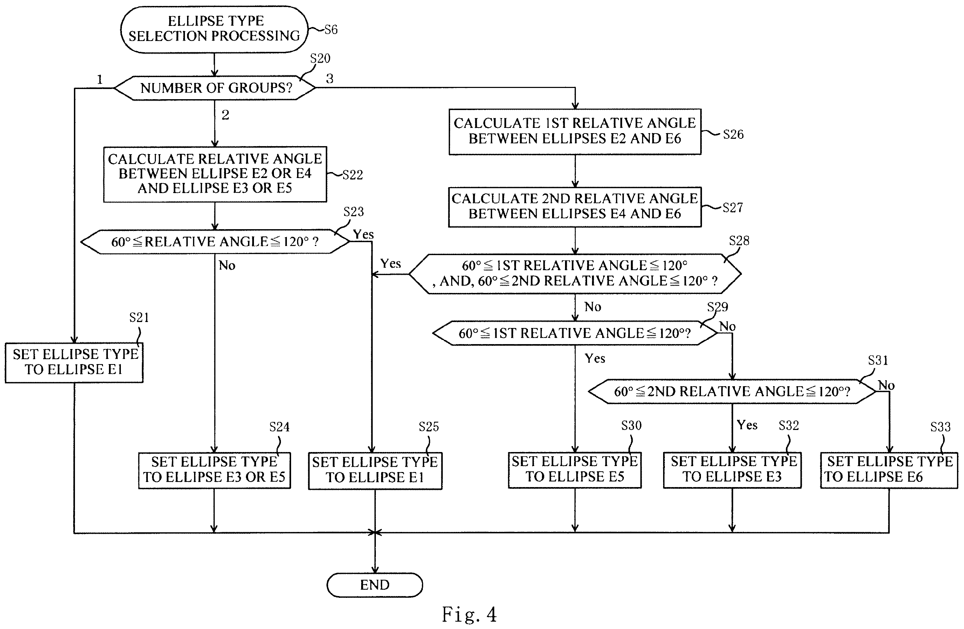

The CPU 5 is an arithmetic device for controlling the respective sections mutually connected with the bus line 8. A control program 6a is stored in the HDD 6 as a nonvolatile rewritable storage device for storing the program to be executed by the CPU 5 and data of fixed values. Upon execution of the control program 6a by the CPU 5, the main processing as shown in Fig. 4 is executed.

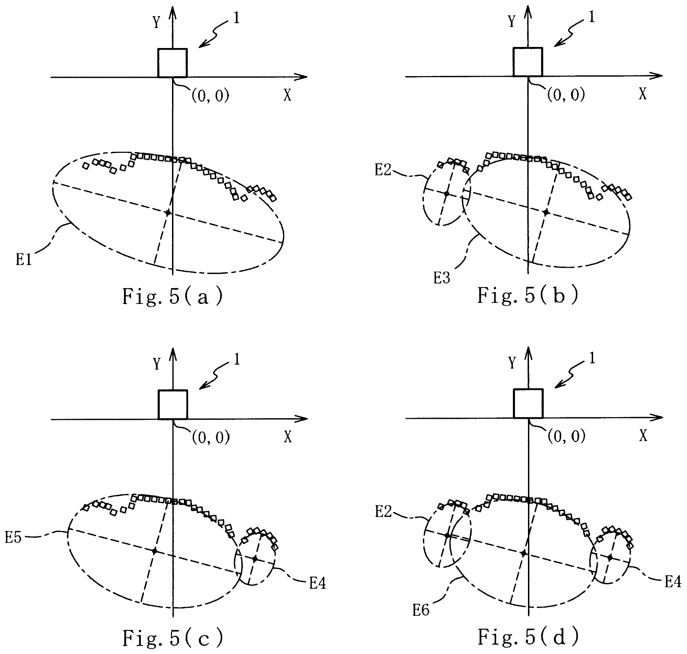

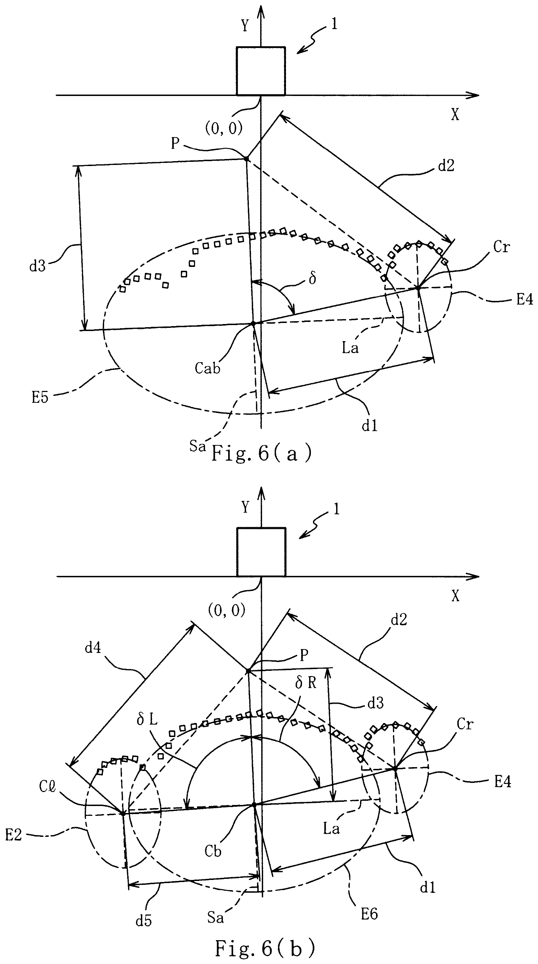

The RAM 7 is a memory for storing various work data and flags rewritably in execution of the control program 6a by the CPU 5, and includes a separation distance memory 7a that stores the separation distance (unit: mm) used for grouping the measured distance values MP acquired from the ranging sensor 3, a group count memory 7b that stores the number of groups generated by grouping, an ellipse type memory 7c that stores the ellipse type (see Figs. 5) corresponding to the approximate ellipse of the upper body, and a body angle memory 7d that stores a body angle $\theta$ (see Fig. 6(a)) of the target H.

Referring to Fig. 3 to Figs. 7, the processing to be executed by the CPU 5 of the control unit 2 will be described. The main processing is executed immediately after power supply to the body direction estimation device 1. Fig. 3 is a flowchart of the main processing. In the main processing, a measured distance value MP is acquired from the ranging sensor 3 (S1). Subsequent to processing in S1, 50 mm is set in the separation distance memory 7a (S2). Subsequent to processing in S2, the measured distance values MP are grouped based on values in the separation distance memory 7a to generate a group having both arms or the torso end serving as a boundary (S3).

Specifically, values of the distance between adjacent measured distance values MP (ranging interval) are all calculated with respect to all the measured distance values MP. If the ranging interval is equal to or smaller than the separation distance stored in the separation distance memory 7a, it is determined that the two corresponding measured distance values MP are in the same group. Meanwhile, if the ranging interval is longer than the separation distance, it is determined that the boundary as both arms or the torso exists between the measured distance values MP. Accordingly, the two corresponding measured distance values MP are in the different groups. The final number of the groups is stored in the group count memory 7b.

Subsequent to processing in S3, it is confirmed whether the number of groups stored in the group count memory 7b is equal to 3 or smaller (S4). In the embodiment, the above-described confirmation is made to estimate the approximate ellipse of the upper body from the positional relationship between the approximate ellipses of the arm and the torso, which are calculated from the measured distance values MP of the respective groups as described later regarding the torso ellipse type selection processing (Figs. 5) to be executed in S5. Therefore, the number of groups has to be 3 or smaller each including the right arm, the left arm, and the torso. In processing in S4, it is confirmed whether the number of groups obtained in processing in S3 is 3 or smaller. In the case of 1 group, both arms and the torso are in the same group. In the case of 2 groups, the right arm and the torso are in the same group, while having the left arm being in another group, or the left arm and the torso are in the same group while having the right arm being in another group.

In processing in S4, if the number of groups is larger than 3 (S4 : No), it is determined that the plurality of groups have been generated from the actually unseparable arm or the torso in processing in S3 while having the part other than both arms or the torso end serving as the boundary because of the small separation distance. In such a case, 10 mm is added to the value in the separation distance memory 7a (S6) to increase the separation distance. Then the grouping process is executed again in S3.

Meanwhile, if the number of groups is equal to or smaller than 3 (S4 : Yes), it is determined that the group of both arms or the torso has been generated in processing in S3. The ellipse type selection processing is then executed (S5). It is possible to execute the ellipse type selection processing to be described later, having, at most, both arms and the torso being separately grouped. An initial value to be set in the separation distance memory 7a in processing in S2 is not limited to 50 mm, but may be either more or less than 50 mm. The value to be added to the value in the separation distance memory 7a in processing in S6 is not limited to 10 mm, but may be either more or less than 10 mm.

Referring to Fig. 4 to Figs. 7, the ellipse type selection processing in S5 will be described. Fig. 4 is a flowchart of the ellipse type selection processing. The ellipse type selection processing is executed for selecting the ellipse type of the approximate ellipse of the upper body from the ellipses E1, E3, E5, E6 based on the group generated by grouping. Each of the ellipses E1 to E6 to be selected as the ellipse type for the approximate ellipse of the upper body will be described referring to Figs. 5.

Fig. 5(a) is a schematic view of the ellipse type of the approximate ellipse to be formed when both arms and the torso are grouped in the same group. Fig. 5(b) is a schematic view of the ellipse type of the approximate ellipse to be formed when the left arm is in the group different from the group of the right arm and the torso. Fig. 5(c) is a schematic view of the ellipse type of the approximate ellipse to be formed when the right arm is in the group different from the group of the left arm and the torso. Fig. 5(d) is a schematic view of the ellipse type of the approximate ellipse to be formed when the right arm, the left arm, and the torso are in the different groups from one another. Referring to Figs. 5 to Figs. 7, the measured distance values MP of the target H acquired from the ranging sensor 3 are shown in white square-like marks on an XY plane while having the position of the body direction estimation device 1 set to (0, 0) in planar view.

As Figs. 5 show, the ellipse E1 (Fig. 5(a)) is the ellipse type of the approximate ellipse to be formed when both arms and the torso are in the same group. The ellipse E2 (Figs 5(b), 5(d)) is the ellipse type of the approximate ellipse to be formed when only the left arm is grouped. The ellipse E3 (Fig. 5(b)) is the ellipse type of the approximate ellipse to be formed when the right arm and the torso are in the same group. The ellipse E4 (Figs. 5(c), 5(d)) is the ellipse type of the approximate ellipse to be formed when only the right arm is grouped. The ellipse E5 (Fig. 5(c)) is the ellipse type of the approximate ellipse to be formed when the left arm and the torso are in the same group. The ellipse E6 (Fig. 5(d)) is the ellipse type of the approximate ellipse to be formed when only the torso is grouped.

Referring to Fig. 4, the ellipse type selection processing is executed by confirming the number of groups stored in the group count memory 7b (S20). If the number of the group is 1 (S20 : "1"), it is determined that both arms and the torso have been in the same group (Fig. 5(a)) in processing in S3 of Fig. 3. The ellipse E1 is set in the ellipse type memory 7c (S21).

In processing in S20, if the number of groups is 2 (S20 : "2"), it is determined that the left arm is in the group different from the group of the right arm and the torso, or the right arm is in the group different from the group of the left arm and the torso in processing in S3 of Fig. 3. The ellipses E2, E3 (Fig. 5(b)), or E4, E5 (Fig. 5(c)) may be selected as the ellipse type. Additionally, the group of the left (right) arm, and the group of the right (left) arm and the torso are recognized as being the same. The ellipse E1 may also be selected as the ellipse type.

In processing in S23 and subsequent steps, the ellipse type for the approximate ellipse of the upper body is selected from those as described above in accordance with the positional relationship between the approximate ellipses corresponding to the respective ellipse types. In processing in S20, if the number of groups is 2 (S20 : "2"), it is confirmed whether the relative angle δ is equal to 60° or larger, and equal to 120° or smaller (S23). The processing to be executed in S23 will be described referring to Fig. 6(b). Fig. 6(a) is a schematic view of the positional relationship between 2 groups, that is, the approximate ellipse of the right arm and the approximate ellipse of the left arm and the torso.

Referring to Fig. 6(a), the approximate ellipse estimated from the measured distance values MP corresponding to the ellipse E4 (right arm) has a center position Cr. The approximate ellipse estimated from the measured distance values MP corresponding to the ellipse E5 (left arm and torso) has a center position Cab. The approximate ellipse is calculated by the least square method based on the measured distance values MP corresponding to the respective groups. A reference point P is positioned on the straight line along the minor axis Sa direction of the approximate ellipse as the ellipse E5 while passing through the center Cab. The distance between the centers Cab and Cr is d1, and the distance between the centers Cab and Cr is d2. The distance between the center Cab and the reference point P is d3 that is 1 m long, for example. The length of the distance d3 is not limited to 1 m, but may be either longer or shorter than 1 m.

In the embodiment, the ellipse E1 of both arms and torso is considered as the most approximate ellipse for estimating the upper body shape. Containing both arms and torso, the ellipse E1 becomes the approximate ellipse having shoulders positioned on both tops at the major axis side. The approximate ellipse shape becomes the most approximate to the upper body shape. Especially as the target H swings right and left arms alternately in walking, those arms periodically move forward and backward. If either the right or left arm is separated forward or backward too far, the resultant approximate ellipse of the ellipse E1 may be formed into the shape totally different from the actual upper body shape because of the right or the left arm positioned too far.

In the embodiment, it is determined whether the right arm or the left arm is positioned too far based on the positional relationship between the approximate ellipse of one of the right and left arms and the approximate ellipse of the other arm and the torso. If there is no right or left arm positioned too far, the ellipse E1 is determined as the ellipse type corresponding to the approximate ellipse of the upper body. Meanwhile, if there is the right or left arm positioned too far, the ellipse type that does not contain the right or the left arm positioned too far, but contains the torso (ellipse E5 or E3) is determined as the ellipse type corresponding to the approximate ellipse of the upper body. This makes it possible to estimate the approximate ellipse of the upper body while suppressing the effect of the right or the left arm positioned too far.

Specifically, a relative angle $\delta$ formed between the approximate ellipse of ellipse E4 and the approximate ellipse of ellipse E5 is calculated (S22). The relative angle $\delta$ is an angle formed between the straight line that connects the reference point P and the center Cab, and the straight line that connects the centers Cab and Cr. The relative angle $\delta$ is calculated by the following formula 1.

[Formula 1]

$$\delta = \cos^{-1}\left(\frac{d1^2 + d3^2 - d2^2}{2 d1 d3}\right) \quad \cdot \cdot \cdot (\text{Formula1})$$

It is confirmed whether the calculated relative angle $\delta$ is equal to 60° or larger, and equal to 120° or smaller (S23).

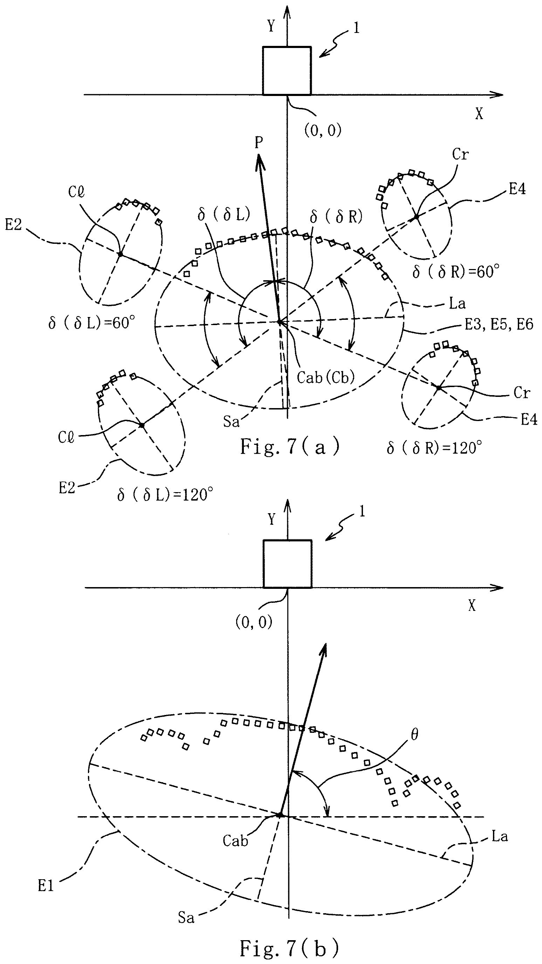

Referring to Fig. 7(b), a threshold value of the relative angle $\delta$ will be described. Fig. 7(a) is a schematic view of the threshold values at the relative angles $\delta$ ($\delta$R, $\delta$L). Referring to Fig. 7(a), if the relative angle $\delta$ is equal to 60° or larger, and equal to 120° or smaller, it is determined that the approximate ellipse of ellipse E4 and the approximate ellipse of ellipse E5 have been brought into close to each other. It is therefore possible to recognize the group of the right arm corresponding to the ellipse E4, and the group of the left arm and the torso corresponding to the ellipse E5 as being the same. In such a case (S23 : Yes), the ellipse E1 is set in the ellipse type memory 7c (S25). That is, it is determined that both arms and the torso have been brought into close to each other. It is possible to estimate the approximate ellipse of the upper body with the ellipse E1, further matching between the approximate ellipse and the upper body shape.

Meanwhile, if the relative angle $\delta$ is smaller than 60° or larger than 120° (S23 : No), it is determined that the approximate ellipse of ellipse E4 and the approximate ellipse of ellipse E5 have been positioned too far. In such a case, the ellipse E5 is set in the ellipse type memory 7c (S24). As the approximate ellipse of ellipse E4 (right arm) positioned too far is excluded from the ellipse type of the approximate ellipse of the upper body. It is therefore possible to estimate the approximate ellipse of the upper body while suppressing the effect of the right arm positioned too far.

If the left arm is in the group different from the group of the right arm and the torso, the ellipse type of the approximate ellipse of the upper body may be determined in the similar way to the one as described above. The approximate ellipse estimated from the measured distance values MP corresponding to the ellipse E2 (left arm) has the center position Cl (not shown), and the approximate ellipse estimated from the measured distance values MP corresponding to the ellipse E3 (right arm and torso) has the center position Cab. The reference point P is positioned on the straight line along the minor axis direction of the approximate ellipse of the ellipse E3 while passing through the center Cab. The distance between the center Cab and the reference point P is d3. The distance between the centers Cab and Cl is d1. The distance between the centers Cab and Cl is d2.

The relative angle $\delta$ formed between the approximate ellipse of ellipse type E2 and the approximate ellipse of ellipse E3 is calculated (S22). The relative angle $\delta$ is an angle formed between the straight line that connects the reference point P and the center Cab, and the straight line that connects the centers Cab and Cl. The relative angle $\delta$ is calculated by the formula 1 as described above. It is confirmed whether the calculated relative angle $\delta$ is equal to 60° or larger, and equal to 120° or smaller (S23). If the relative angle $\delta$ is equal to 60° or larger, and equal to 120° or smaller, the ellipse E1 is set in the ellipse type memory 7c (S25). Meanwhile, if the relative angle $\delta$ is larger than 60°, or smaller than 120° (S23 : No), the ellipse E3 is set in the ellipse type memory 7c (S24).

Referring to Figs. 5 and Figs. 7, an explanation will be made with respect to processing to be executed in the case of 3 groups (S20 : "3") in processing in S20 of Figs. 5. If the number of groups is 3, the left arm, the torso, and the right arm are grouped in the different groups in processing in S3 of Fig. 3. In this case, the ellipses E2, E6, E4 (Fig. 5(d)) may be selected as the respective ellipse type.

Additionally, the group of both arms and torso, the group of right arm and torso, and the group of left arm and torso may be recognized as being the same, respectively. Therefore, the ellipses E1, E3, E5 may be selected as the respective ellipse type. In processing in S26 and subsequent steps of Figs. 5, the ellipse type for the approximate ellipse of the upper body is selected from those as described above based on the positional relationship between the approximate ellipses estimated by the respective ellipse types.

In processing in S20 of Figs. 5, if the number of groups is 3 (S20 : "3"), the first relative angle $\delta$L between the ellipses E2 and E6, and the second relative angle $\delta$R between the ellipses E4 and E6 are calculated (S26, S27).

Processing in S26 to S33 will be described referring to Fig. 6(b). Fig. 6(b) is a schematic view of a positional relationship among 3 groups, that is, the approximate ellipses of the left arm, the torso, and the right arm. Referring to Fig. 6(b), the approximate ellipse estimated from the measured distance values MP corresponding to the ellipse E2 (left arm) has the center position Cl. The approximate ellipse estimated from the measured distance values MP corresponding to the ellipse E4 (right arm) has the center position Cr. The approximate ellipse estimated from the measured distance values MP corresponding to the ellipse E6 (torso) has the center position Cb. The reference point P is positioned on the straight line along the minor axis direction of the approximate ellipse of ellipse E6 while passing through the center Cb. The distance between the center Cb and the reference point P is d3 that is 1 m long, for example. The distance between the centers Cb and Cr is d1. The distance between the center Cr and the reference point P is d2. The distance between the center Cl and the reference point P is d4. The distance between the centers Cb and Cl is d5.

Likewise the case of 2 groups, in the case of 3 groups, the ellipse type of the approximate ellipse of the upper body is selected from the ellipses E1, E3, E5, and E6 based on the positional relationship between the approximate ellipse of the right arm or the left arm, and the approximate ellipse of the torso.

Referring back to Figs. 5, if the number of groups is 3 (S20 : "3"), the first relative angle $\delta L$ formed between the approximate ellipses of ellipses E2 and E6 is calculated (S26). The first relative angle $\delta L$ is the angle formed between the straight line that connects the reference point P and the center Cb, and the straight line that connects the centers Cb and Cl. The first relative angle $\delta L$ is calculated by the following formula 2.

[Formula 2]

$$\delta L = \cos^{-1}\left(\frac{d3^2 + d5^2 - d4^2}{2d3d5}\right) \quad \cdot \cdot \cdot \text{(Formula2)}$$

Subsequent to processing in S26, the second relative angle $\delta R$ between the approximate ellipses of ellipses E4 and E6 is calculated (S27). The second relative angle $\delta R$ is the angle formed between the straight line that connects the reference point P and the center Cb, and the straight line that connects the centers Cb and Cr. The second relative angle $\delta R$ is calculated by the following formula 3.

[Formula 3]

$$\delta R = \cos^{-1}\left(\frac{d1^2 + d3^2 - d2^2}{2d1d3}\right) \quad \cdot \cdot \cdot \text{(Formula3)}$$

In processing in S28 and subsequent steps, the ellipse type of the approximate ellipse of the upper body is selected based on the positional relationship between the ellipses E2 and E6, and the positional relationship between the ellipses E4 and E6 using the first relative angle $\delta L$ and the second relative angle $\delta R$, which are calculated by the formulae 2, 3. Subsequent to processing in S26, it is confirmed whether the first relative angle $\delta L$ is equal to 60° or larger, and equal to 120° or smaller, and whether the second relative angle $\delta R$ is equal to 60° or larger, and 120° or smaller (S28).

Referring to Fig. 7(a), the threshold values of the first relative angle $\delta L$ and the second relative angle $\delta R$ will be described. Likewise the above-described relative angle $\delta$, if the first relative angle $\delta L$ is equal to 60° or larger, and equal to 120° or smaller, it is determined that the approximate ellipse of ellipse E2 and the approximate ellipse of ellipse E6 have been brought into close to each other. If the first relative angle $\delta L$ is larger than 60° or smaller than 120°, it is determined that the approximate ellipse of ellipse E2 and the approximate ellipse of ellipse E6 have been positioned too far. If the second relative angle $\delta R$ is equal to 60° or larger, and equal to 120° or smaller, it is determined that the approximate ellipse of ellipse E4 and the approximate ellipse of ellipse E6 have been brought into close to each other. If the second relative angle $\delta R$ is larger than 60° or smaller than 120°, it is determined that the approximate ellipse of ellipse E4 and the approximate ellipse of ellipse E6 have been positioned too far.

Referring back to Fig. 4, if both the first relative angle $\delta L$ and the second relative angle $\delta R$ are equal to 60° or larger, and equal to 120° or smaller (S28 : Yes), it is determined that the approximate ellipse of ellipse E2 and the approximate ellipse of ellipse E6 have been brought into close to each other, and the approximate ellipse of ellipse E4 and the approximate ellipse of ellipse E6 have been brought into close to each other. Therefore, the groups of the left arm, the torso, and the right arm may be recognized as being the same. In this case, the ellipse E1 is set in the ellipse type memory 7c (S25).

If the condition that the angle is equal to 60° or larger, and equal to 120° or smaller is not satisfied by the first relative angle $\delta L$ and/or the second relative angle $\delta R$ (S28 : No), it is confirmed whether the first relative angle $\delta L$ is equal to 60° or larger, and equal to 120° or smaller (S29). Although it is determined that the groups of the left arm, the torso, and the right arm are not recognized as being the same as a result of processing in S28, the group of the left or right arm, and the group of the torso may be recognized as being the same. Firstly, therefore, it is confirmed whether the first relative angle $\delta L$ is equal to 60° or larger, and equal to 120° or smaller (S29).

If the first relative angle $\delta L$ is equal to 60° or larger, and equal to 120° or smaller (S29 : Yes), it is determined that the approximate ellipse of ellipse E2 and the approximate ellipse of ellipse E6 have been brought into close to each other. The group of the left arm, and the group of the torso may be recognized as being the same. In this case (S29 : Yes), the ellipse E5 is set in the ellipse type memory 7c (S30).

In processing in S29, if the first relative angle $\delta$L is smaller than 60° or larger than 120° (S29 : No), there may be the case that the group of the right arm and the group of the torso are recognized as being the same although the group of the left arm and the group of the torso are not recognized as being the same. It is further confirmed whether the second relative angle $\delta$R is equal to 60° or larger, and equal to 120° or smaller (S31). If the second relative angle $\delta$R is equal to 60° or larger, and equal to 120° or smaller (S31 : Yes), it is determined that the approximate ellipse of ellipse E4 and the approximate ellipse of ellipse E6 have been brought into close to each other. The group of the right arm and the group of the torso may be recognized as being the same. In this case (S31 : Yes), The ellipse E3 is set in the ellipse type memory 7c (S32).

Although the approximate ellipse of one of ellipses E2 and E4 is positioned too far from the approximate ellipse of ellipse E6 in processing in S30, S32, if the approximate ellipse of ellipse E4 or E2 corresponding to the other arm is recognized as being in the same group as that of the approximate ellipse of ellipse E6, the corresponding ellipse type is set in the ellipse type memory 7c. The approximate ellipse of the upper body is estimated from the ellipses E3, E5 corresponding to the group containing the right or the left arm, and the torso. In this case, the ellipse E1 containing the other arm separating too far is not selected. It is possible to estimate the approximate ellipse of the upper body while suppressing the effect of the arm separating too far from the torso.

In processing in S31, if the second relative angle $\delta$R is smaller than 60° or larger than 120° (S31 : No), it is determined that the approximate ellipses of ellipses E2 and E4 are positioned too far from the approximate ellipse of ellipse E6. In this case, the ellipse E6 is set in the ellipse type memory 7c (S33). It is possible to estimate the approximate ellipse of the upper body while suppressing the effect of both arms.

Subsequent to processing in S21, S24, S25, S30 to S33, the ellipse type selection processing is terminated to return to the main processing as shown in Fig. 3. Subsequent to the ellipse type selection processing in S6, the measured distance value MP corresponding to the ellipse type stored in the ellipse type memory 7c is acquired. The approximate ellipse of the upper body is calculated by the least square method based on the acquired measured distance value MP (S7). Subsequent to processing in S7, the body angle $\theta$ is estimated from the calculated approximate ellipse of the upper body (S8). Referring to Fig. 7(b), processing in S8 will be described. Fig. 7(b) is a schematic view of the body angle. The ellipse E1 represents the approximate ellipse estimated in processing in S7. The direction of the target H is estimated as the direction along the minor axis Sa of the approximate ellipse. The body angle $\theta$ is formed between the direction of the target H and the X-axis. The method of estimating the direction of the target H and the body angle $\theta$ for the ellipse E1 is applicable to the ellipses E3, E5, E6, and explanations thereof, thus will be omitted.

Referring back to Fig. 3, subsequent to processing in S8, the estimated body angle $\theta$ is output to the LCD 11 of the display unit 5 (S9). The body angle $\theta$ may be output to an arbitrary component other than the LCD 11. The body angle $\theta$ may be stored in the HDD 7, or transmitted to the external server and PC and the like by a not shown communication device. Subsequent to processing in S9, processing in S1 will be repeatedly executed.

As described above, the body direction estimation device 1 of this embodiment is configured to group the measured distance values MP of the upper body of the target H acquired from the ranging sensor 3 into one or more groups. If the relative angle formed between the approximate ellipse of the group of either the right or left arm, and the approximate ellipse of the group of the torso is equal to 60° or larger, and equal to 120° or smaller, those groups are recognized as being the same. Otherwise, they are grouped into different groups.

The ellipse type corresponding to the group containing the torso is acquired, and stored in the ellipse type memory 7c. The measured distance value MP corresponding to the ellipse type is acquired, and the approximate ellipse of the upper body is calculated from the measured distance value MP. The direction of the target H is determined as the minor axis Sa direction of the approximate ellipse of the upper body. The arm positioned too far from the torso is distinguished from the group containing the torso. It is possible to estimate the direction of the target H (direction of the upper body) while suppressing the effect of the arm position of the target H.

Additionally, the arm positioned too far from the torso is excluded from the group containing the torso. The direction of the target H may be estimated although the measured distance value MP of the arm is acquired from the ranging sensor 3. The ranging sensor 3 does not have to be directed at a pin point to the body part such as the shoulder that allows acquisition of the upper body position without being influenced by the arm. The vertical position, and the elevation angle of the ranging sensor 3 may be easily set.

In the conventional art, the direction of the target H is estimated based on the change in the center of gravity of the target H in walking. As the estimation requires time for tracking the center of gravity, the direction of the target H cannot be estimated quickly. When the target stops walking, the change in the center of gravity cannot be observed, resulting in inaccurate estimation of the direction of the target H.

The body direction estimation device 1 of the embodiment is configured to select the ellipse type containing the torso based on the group calculated from the measured distance value MP acquired from the ranging sensor 3, calculate the approximate ellipse of the upper body based on the ellipse type, and estimate the direction of the target H based on the approximate ellipse of the upper body. As a result, the direction of the target H may be estimated in real time without requiring the time for tracking the center of gravity. The direction of the target H even in a stopped state may be estimated based on the measured distance value MP acquired from the ranging sensor 3.

In the moving body configured to move autonomously following up the target H (for example, the moving body 100 disclosed in Japanese Unexamined Patent Application Publication No. 2016-184337), the direction of the moving body is changed in accordance with the direction of the target H so that the target H and the display of the moving body face with each other. Conventionally, the image of the upper body of the target H acquired from the camera is subjected to the image analysis. Based on the analysis result, the direction of the target H is estimated. In this case, the direction of the target H derived from the image analysis may be made unstable depending on the position of swinging arms of the target H in walking. Consequently, the behavior to the direction of the moving body cannot be stabilized.

Then the body direction estimation device 1 is installed in the moving body to have its direction changed in accordance with the direction of the target H estimated by the body direction estimation device 1. As the direction of the target H is estimated while suppressing the effect of the arm position of the target H, the behavior to the direction of the moving body may be stabilized.

The present invention has been described in reference to the embodiment. However, it is to be readily understood that the present invention is not limited to the embodiment as described above, but may be variously modified within the scope of the present invention.

In the embodiment, the control program 6a is executed in the body direction estimation device 1. However, it is not limited to the one as described above. It is possible to execute the control program 6a stored in a personal computer, a smartphone, a tablet terminal and the like.

In the embodiment, the ranging sensor 3 is used for detecting the measured distance value of the upper body with laser beam. However, it is not limited to the one as described above. It is possible to use the distance image sensor for detecting the distance information or the like in the space from the acquired image so that the measured distance value of the upper body is detected.

In the embodiment, the approximate ellipses are calculated by the least square method based on the measured distance value MP. However, it is not limited to the one as described above. The approximate ellipse may be calculated by various kinds of arithmetic methods other than the least square method.

In the embodiment, the reference point P is positioned on the straight line along the minor axis Sa direction of the approximate ellipses corresponding to E3, E5, E6 while passing through the centers Cab, Cb of the approximate ellipses corresponding to the ellipses E3, E5, E6, respectively. The reference point P may be positioned on the straight line along the major axis La direction of the approximate ellipses corresponding to the ellipses E3, E5, E6 while passing through the centers Cab, Cb, respectively without being limited to the one as described above. Arbitrary point may be set as the reference point P.

In the embodiment, it is determined whether the approximate ellipse of either right or left arm, and the approximate ellipse of the torso have been brought into close to each other based on the relative angle $\delta$, the first relative angle $\delta L$, the second relative angle $\delta R$. However, it is not limited to the one as described above. It may be determined whether the approximate ellipse of either right or left arm, and the approximate ellipse of the torso have been brought into close to each other based on the distance d2 between the centers Cab and Cr, and the distance d4 between the centers Cab and Cl instead of the relative angle $\delta$, the first relative angle $\delta L$, and the second relative angle $\delta R$.

[Reference Signs List]

| | |
|---|---|
| 1 | body direction estimation device |
| 3 | ranging sensor |
| 6a | control program |
| S3 to S5 | grouping unit |
| S4, S5 | a part of grouping unit, re-grouping unit |
| S6 | ellipse selection unit |
| S7 | ellipse calculation unit |
| S8 | body direction estimation unit |

**Claims**

**1.** A body direction estimation device (1) comprising:

an upper body distance measurement unit (3) for performing distance measurement of an upper body of a target (H) ;
a grouping unit (S3 to S5) for grouping measured distance data (MP) derived from the distance measurement performed by the upper body distance measurement unit (3);
an ellipse calculation unit (S20) for calculating an approximate ellipse (E1 to E6) for each of groups generated by the grouping unit (S3 to S5);
an ellipse selection unit (S21 to S33) for selecting an ellipse for estimation of a direction of the target (H) based on a positional relationship among the plurality of approximate ellipses (E1 to E6), if any, calculated by the ellipse calculation unit (S20); and
a body direction estimation unit (S8) for estimating a direction of the target (H) based on the ellipse selected by the ellipse selection unit (S21 to S33).

2. The body direction estimation device (1) according to claim 1, wherein the ellipse calculation unit (S20) further calculates the approximate ellipse (E1 to E6) based on the group corresponding to two or more adjacent approximate ellipses (E1 to E6) among those calculated for each of the groups generated by the grouping unit (S3 to S5).

3. The body direction estimation device (1) according to claim 1 or 2, wherein when two adjacent approximate ellipses (E1 to E6) among those calculated by the ellipse calculation unit (S20) are in a predetermined positional relationship, the ellipse selection unit (S21 to S33) selects the approximate ellipse (E1 to E6) calculated based on the group corresponding to the two approximate ellipses (E1 to E6) as the ellipse for estimation of the direction of the target (H) .

4. The body direction estimation device (1) according to any one of claim 1 to claim 3, wherein when the two adjacent approximate ellipses (E1 to E6) among those calculated by the ellipse calculation unit (S20) are not in a predetermined positional relationship, the ellipse selection unit (S21 to S33) selects a larger one of the two adjacent approximate ellipses (E1 to E6) as the ellipse for estimation of the direction of the target (H).

5. The body direction estimation device (1) according to claim 3 or 4, wherein the predetermined positional relationship is determined based on an angle formed between a straight line that connects centers of the two adjacent approximate ellipses (E1 to E6) among those calculated by the ellipse calculation unit (S20), and a minor axis (Sa) of the larger one of the two adjacent approximate ellipses (E1 to E6) .

6. The body direction estimation device (1) according to any one of claim 1 to claim 5, wherein:

   when a ranging interval between adjacent distance measurement points of the respective measured distance data (MP) is within a threshold value, the grouping unit (S3 to S5) groups the adjacent distance measurement points into the same group; and
   a re-grouping unit (S4, S5) is provided for re-grouping the groups in excess of a predetermined number of groups using a threshold value reset to be larger than the threshold value.

7. The body direction estimation device (1) according to any one of claim 1 to claim 6, wherein the grouping unit (S3 to S5) groups the respective measured distance data (MP) to generate one group containing both arms and a torso, two groups including a group containing one of arms and the torso, and a group containing the other arm, or three groups including a group containing one of the arms, a group containing the torso, and a group containing the other arm.

8. The body direction estimation device (1) according to any one of claim 1 to claim 7, wherein the ellipse selection unit (S21 to S33) selects one of the approximate ellipse (E1 to E6) of the both arms and the torso, the approximate ellipse (E1 to E6) of one of the arms and the torso, and the approximate ellipse (E1 to E6) of the torso as the ellipse for estimation of the direction of the target (H) from those calculated by the ellipse calculation unit (S20).

9. The body direction estimation device (1) according to any one of claim 1 to claim 8, wherein the body direction estimation unit (S8) estimates the direction of the target (H) as the minor axis (Sa) direction of the approximate ellipse (E1 to E6) selected by the ellipse selection unit (S21 to S33).

10. The body direction estimation device (1) according to any one of claim 1 to claim 9, wherein the upper body distance measurement unit (3) performs the distance measurement of the upper body of the target (H) upward obliquely.

11. A body direction estimation program (6a) that allows a computer to execute:

an upper body measured distance acquiring function (S1) for acquiring measured distance data (MP) derived from distance measurement of an upper body of a target (H);

a grouping function (S3 to S5) for grouping the measured distance data (MP) acquired from the upper body measured distance acquiring function (S1);

an ellipse calculation function (S20) for calculating an approximate ellipse (E1 to E6) for each of groups generated by the grouping function (S3 to S5);

an ellipse selection function (S21 to S33) for selecting an ellipse for estimating a direction of the target (H) based on a positional relationship among the plurality of approximate ellipses (E1 to E6), if any, calculated by the ellipse calculation function (S20); and

a body direction estimation function (S8) for estimating the direction of the target (H) based on the ellipse selected by the ellipse selection function (S21 to S33) .

Fig. 1

Fig. 2

Fig. 3

ELLIPSE TYPE SELECTION PROCESSING — S6

S20 NUMBER OF GROUPS?

1

2

3

CALCULATE 1ST RELATIVE ANGLE BETWEEN ELLIPSES E2 AND E6 — S26

CALCULATE RELATIVE ANGLE BETWEEN ELLIPSE E2 OR E4 AND ELLIPSE E3 OR E5 — S22

CALCULATE 2ND RELATIVE ANGLE BETWEEN ELLIPSES E4 AND E6 — S27

S23 $60° \leqq$ RELATIVE ANGLE $\leqq 120°$ ?    Yes

No

S28 $60° \leqq$ 1ST RELATIVE ANGLE $\leqq 120°$ , AND, $60° \leqq$ 2ND RELATIVE ANGLE $\leqq 120°$ ?    Yes

No

S21 SET ELLIPSE TYPE TO ELLIPSE E1

S29 $60° \leqq$ 1ST RELATIVE ANGLE $\leqq 120°$?    No

Yes

S31 $60° \leqq$ 2ND RELATIVE ANGLE $\leqq 120°$?    No

S24 SET ELLIPSE TYPE TO ELLIPSE E3 OR E5

S25 SET ELLIPSE TYPE TO ELLIPSE E1

S30 SET ELLIPSE TYPE TO ELLIPSE E5

Yes S32 SET ELLIPSE TYPE TO ELLIPSE E3

S33 SET ELLIPSE TYPE TO ELLIPSE E6

END

Fig. 4

Fig. 5 (a)

Fig. 5 (b)

Fig. 5 (c)

Fig. 5 (d)

Fig. 6 ( a )

Fig. 6 ( b )

Fig. 7 ( a )

Fig. 7 ( b )

**INTERNATIONAL SEARCH REPORT**

| International application No. |
| --- |
| PCT/JP2018/010041 |

A. CLASSIFICATION OF SUBJECT MATTER
Int.Cl.  G01B11/24(2006.01)i,  G01B11/26(2006.01)i,  G06T7/521(2017.01)i,
        G06T7/70(2017.01)i

According to International Patent Classification (IPC) or to both national classification and IPC

B. FIELDS SEARCHED

Minimum documentation searched (classification system followed by classification symbols)
Int.Cl.  G01B11/00-11/30, G06T7/521, G06T7/70

Documentation searched other than minimum documentation to the extent that such documents are included in the fields searched
       Published examined utility model applications of Japan       1922-1996
       Published unexamined utility model applications of Japan     1971-2018
       Registered utility model specifications of Japan             1996-2018
       Published registered utility model applications of Japan     1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2009-116871 A (PALO ALTO RESEARCH CENTER INC.) 28 May 2009, entire text, all drawings & US 2009/0116766 A1 | 1-11 |
| A | JP 2006-64695 A (MATSUSHITA ELECTRIC WORKS, LTD.) 09 March 2006, entire text, all drawings & US 2009/0167857 A1 & WO 2006/011593 A1 & EP 1772752 A1 & CN 1950722 A & KR 10-2008-0047485 A | 1-11 |
| A | JP 10-3547 A (KONICA MINOLTA, INC.) 06 January 1998, entire text, all drawings (Family: none) | 1-11 |

☒  Further documents are listed in the continuation of Box C.        ☐  See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 06 June 2018 (06.06.2018) | 19 June 2018 (19.06.2018) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**

International application No.

PCT/JP2018/010041

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2016-75693 A (ADVANCED TELECOMMUNICATIONS RESEARCH INSTITUTE INTERNATIONAL) 12 May 2016, entire text, all drawings (Family: none) | 1-11 |
| A | JP 2009-168578 A (ADVANCED TELECOMMUNICATIONS RESEARCH INSTITUTE INTERNATIONAL) 30 July 2009, entire text, all drawings (Family: none) | 1-11 |
| A | JP 2008-275442 A (THE UNIVERSITY OF TOKYO, HITACHI INFORMATION & COMMUNICATION ENGINEERING LTD.) 13 November 2008, entire text, all drawings (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011081634 A
- JP 2010169521 A

- JP 2016184337 A